# EUROPEAN PATENT APPLICATION

(11) **EP 4 137 233 A1**
(43) Date of publication of application: **22.02.2023**
(21) Application number: 22188433.1
(22) Date of filing: 03.08.2022
(51) Int. Cl.: B01J 35/04, B01D 53/92, B01J 37/02

(54) **IMPROVEMENTS IN OR RELATING TO PARTICULATE FILTERS**

(30) Priority: 20.08.2021 US 202163260466 P
(71) Applicant: Johnson Matthey Public Limited Company, London EC4A 4AB (GB)
(72) Inventor: ARULRAJ, Kaneshalingam, Royston SG8 5HE (GB); BELLHAM, Peter, Royston SG8 5HE (GB); CHANDLER, Guy, Royston SG8 5HE (GB); CHIFFEY, Andrew, Royston SG8 5HE (GB); COLE, Kieran John, Royston SG8 5HE (GB); CORRIGAN, Chris, Royston SG8 5HE (GB); MARVELL, David, Royston SG8 5HE (GB); MOREAU, Francois, Royston SG8 5HE (GB); TURNER, John, Royston SG8 5HE (GB)
(74) Representative: Armstrong, Emily

(57) **Abstract**

The disclosure relates to a method of forming a coated monolith article for the treatment of an exhaust gas. The method comprises the steps of: retaining a porous monolith article in a coating apparatus, the porous monolith article comprising a plurality of channels for the passage of an exhaust gas, each channel having a gas-contacting surface; depositing cementitious particles as a dry powder onto the gas-contacting surface of at least some of the channels; and reacting the cementitious particles with a liquid or gaseous reagent in situ within the porous monolith article to provide the coated monolith article.

## Description

The present disclosure relates to a method of forming a coated monolith article for the treatment of an exhaust gas and coated monolith articles. For example, the disclosure relates to depositing cementitious particles as a dry powder onto gas-contacting surfaces of a monolith article and reacting the cementitious particles with a liquid or gaseous reagent in situ within the monolith article to provide a coated monolith article.

### Background to the Disclosure

There are concerns about emissions of particulate matter (PM), commonly referred to as soot, from internal combustion engines and especially from diesel and gasoline engines in automotive applications. The main concerns are associated with potential health effects, and, in particular, with very tiny particles having sizes in the nanometer range.

Diesel particulate filters (DPFs) and gasoline particulate filters (GPFs) have been fabricated using a variety of materials including sintered metal, ceramic or metal fibres etc., with the most common type in actual mass production being the wall-flow kind made from porous ceramic material fabricated in the form of a monolithic array of many small channels running along the length of the body. Alternate channels are plugged at one end, so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50µm and usually about 20µm. In marked contrast, the size of most diesel particulate matter from a modern passenger car high speed diesel engine is very much smaller, e.g. 10 to 200nm.

Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.

For some filters, for example light duty diesel particulate filters, it is periodically necessary to remove trapped PM from the filter to prevent the build-up of excessive back pressure that is detrimental to engine performance and can cause poor fuel economy. So, in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.

Thus, it would be desirable to improve and or maintain filtration efficiency at all times - for example during the early life of a filter when it is first used, and or during regeneration and immediately afterwards, and or when the filter is loaded with soot.

WO2021028691A1 (the entire contents of which is hereby incorporated by reference) describes that a filter having improved filtration efficiency during the early life of the filter when it is first used, and or during regeneration and immediately afterwards, and or when the filter is loaded with soot may be obtained by a method of treatment that comprises the steps of:
a) containing a dry powder in a reservoir;
b) locating a filter in a filter holder, the filter comprising a porous substrate having an inlet face and an outlet face, the inlet face and the outlet face being separated by a porous structure;
c) establishing a primary gas flow through the porous structure of the filter by applying a pressure reduction to the outlet face of the filter;
d) transferring the dry powder from the reservoir to a spray device located upstream of the inlet face of the filter; and
e) spraying the dry powder, using the spray device, towards the inlet face of the filter such that the dry powder is entrained in the primary gas flow and passes through the inlet face of the filter to contact the porous structure.

In WO2021028691A1 it is described how the dry powder may comprise one or more of fumed alumina, fumed silica, fumed titania, silica aerogel, alumina aerogel, carbon aerogel, titania aerogel, zirconia aerogel or ceria aerogel. In particular, examples of filters are described which have been coated with a fumed aluminium oxide having a tapped density of 0.05 g/l and d50 of 5.97 microns. The filters are preferably calcined after coating with the dry powder.

While this method of treatment has been found to produce filters with improved filtration efficiency characteristics there is still a desire to further improve the processing of such filters, in particular, to improve the durability of the processed filters. In particular, it would be desirable to improve the water tolerance and adhesion of powders that are deposited onto the gas-contacting surfaces of the monolith article in dry form.

### Summary of the Disclosure

Aspects and embodiments of the present disclosure will now be described. The person skilled in the art will recognise that one or more features of one aspect or embodiment of the present disclosure may be combined with one or more features of any other aspect or embodiment of the present disclosure unless the immediate context teaches otherwise. In particular, any feature indicated as being preferred or advantageous may be combined with any other feature or features indicated as being preferred or advantageous.

In a first aspect the present disclosure provides a method of forming a coated monolith article for the treatment of an exhaust gas, the method comprising the steps of:
retaining a porous monolith article in a coating apparatus, the porous monolith article comprising a plurality of channels for the passage of an exhaust gas, each channel having a gas-contacting surface;
depositing cementitious particles as a dry powder onto the gas-contacting surface of at least some of the channels; and
reacting the cementitious particles with a liquid or gaseous reagent in situ within the porous monolith article to provide the coated monolith article.

Advantageously, the present applicant has discovered that cementitious particles may be deposited in a dry form onto the gas-contacting surfaces of a monolith article and thereafter reacted in situ to provide a cemented and strongly-adhered coating that exhibits high tolerance to water-exposure in use.

The method comprises providing a porous monolith article comprising a plurality of channels for the passage of an exhaust gas, each channel having a gas-contacting surface. Porous monolith articles are well-known in the art. Porous monolith articles may sometimes be referred to as substrates, preferably honeycomb substrates, preferably ceramic honeycomb substrates. Such substrates comprise a plurality of channels which are suitable for the passage of an exhaust gas. The channels are parallel and run from an inlet end (or a first end) to an outlet end (or a second end), i.e. the channels run axially through the article. Typically, the channels have a square cross section though any known monolith design may be employed.

The porous monolith article/substrate may be formed, for example, from sintered metal, ceramic or metal fibres etc. For example, the article may be formed from cordierite, various forms of silicon carbide or aluminium titanate.

In some embodiments, the monolith article is a monolith filter. It is particularly preferred that the monolith filter is a wall-flow filter (which may be also be known as a wall flow monolith article). A wall flow filter is well known and typically, adjacent channels are alternatively plugged at each end of the monolith article such that, in use, the exhaust gas passes along an inlet channel (i.e. a channel open at an inlet end of the monolith article for receiving an exhaust gas) and is forced to pass through the channel walls an into an adjacent outlet channel (i.e. a channel open at an outlet end of the monolith article).

The channel walls have a distribution of fine pores providing the monolith article with the required porosity, the average dimensions of the pores in the channel walls, e.g. the filter walls, are typically in the range from 5 to 50 µm. Each channel has a gas contacting surface. That is, each channel has a surface suitable for contacting, for example, an exhaust gas when in use. The surface may be provided by the channel wall surface and/or by the pores contained therein.

In another particularly preferred embodiment, the porous monolith article is a catalyst article (i.e. a catalytic article). Catalytic porous monolith articles are well known and exhibit a catalytic function such as oxidation, NOx trapping, or selective catalytic reduction activity. The porous monolith article may comprise one or more washcoats, preferably catalytic washcoats. A washcoat is a composition that coats and permeates the porous structure of the article. The article comprising said one or more washcoats is preferably then calcined prior to depositing the cementitious particles onto the channels as described herein. The catalyst article can therefore be selected from a three way catalyst (TWC), NOx absorber, oxidation catalyst, selective reduction catalyst (SCR), hydrocarbon trap and a lean NOx catalyst, for example. The catalyst article may contain one or more platinum group metals, particularly those selected from the group consisting of platinum, palladium and rhodium.

In a particularly preferred embodiment, the porous monolith article is a catalytic wall flow filter. Consequently, the article may, for example, be a catalysed soot filter (CSF), a selective catalytic reduction filter (SCRF), a lean NOx trap filter (LNTF), a gasoline particulate filter (GPF), an ammonia slip catalyst filter (ASCF) or a combination of two or more thereof (e.g. a filter comprising a selective catalytic reduction (SCR) catalyst and an ammonia slip catalyst (ASC)).

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter finds particular application when configured for use with an internal combustion engine in the form of a diesel or gasoline engine.

In some embodiments the cementitious particles are inorganic particles. Preferably the cementitious particles comprise or consist of a silicate, an aluminate, or an aluminosilicate. The cementitious particles may consist of a single compound or a mixture of compounds.

In some preferred embodiments the cementitious particles comprise or consist of hydraulic cementitious particles and the step of reacting the cementitious particles with the liquid or gaseous reagent comprises hydrating the hydraulic cementitious particles.

In some particularly preferred embodiments the hydraulic cementitious particles comprise or consist of calcium silicate, calcium aluminate, calcium aluminosilicate and/or calcium aluminoferrite.

In a particularly preferred embodiment the liquid or gaseous reagent comprises or consists of water molecules.

In some embodiments the step of hydrating the hydraulic cementitious particles comprises penetrating the channels with water molecules in a liquid phase. For example, the water molecules in the liquid phase may comprise an aerosolized mist and penetrating the channels with the water molecules may comprise spraying the aerosolized mist into the porous monolith article and/or drawing the aerosolized mist through the porous monolith article. The spraying and/or drawing of the aerosolized mist may be performed using the coating apparatus.

However, in preferred embodiments the step of hydrating the hydraulic cementitious particles comprises exposing the channels to water molecules in a gaseous phase, for example within a humidifying chamber.

In a particularly preferred embodiment the water molecules in the gaseous phase comprise a humidified gas, for example humidified air.

In some embodiments the humidified gas is actively blown and/or drawn through the porous monolith article, for example using an external pump and/or vacuum.

However, in preferred embodiments the humidified gas is diffused and/or convected into the porous monolith article.

In some embodiments the humidified gas has a relative humidity (RH) of greater than or equal to 60%, or 65%, or 70%, or 75%, or 80%, or 85%, or 90%, or 95%.

In a preferred embodiment the step of hydrating the hydraulic cementitious particles comprises a hydrothermal treatment; for example within a hydrothermal oven.

The hydrothermal treatment may comprise subjecting the porous monolith article to an ambient temperature of greater than or equal to 40°C, or 60°C, or 80°C, or 100°C.

In some embodiments the hydrothermal treatment comprises subjecting the porous monolith article to an ambient temperature of up to or equal to 80°C, or 100°C, or 120°C, or 150°C.

In some embodiments the hydrothermal treatment comprises exposing the porous monolith article to the humidified gas for 2 to 24 hours, optionally 4 to 12 hours, optionally 6 to 8 hours.

In some embodiments the cementitious particles comprise or consist of geopolymer precursor particles and the step of reacting the cementitious particles with the liquid or gaseous reagent comprises chemically reacting the geopolymer precursor particles.

In some preferred embodiments the geopolymer precursor particles comprise or consist of an aluminosilicate, a pozzolan, calcined clay, metakaolin, fly ash, blast furnace slag, or silica fume.

In some embodiments the liquid or gaseous reactant comprises or consists of an alkali, preferably an alkali polysilicate, more preferably a sodium or potassium silicate.

In some embodiments the cementitious particles have a tapped density of 1 to 3 g/cm³, optionally 1.5 to 2.5 g/cm³, optionally about 2 g/cm³.

In some preferred embodiments the cementitious particles have a d50 (by volume) of 5 to 60 microns.

The step of reacting the cementitious particles with the liquid or gaseous reagent is performed prior to the monolith article being installed into a device for the treatment of an exhaust gas. For example, the reacting step may be performed in a treatment apparatus before the monolith article is installed in a device such as an exhaust system. The treatment apparatus may be, for example, the coating apparatus described herein, or a separate water-spraying or water-misting apparatus, or a hydrothermal oven.

In some embodiments the step of depositing the cementitious particles as a dry powder onto the gas-contacting surface of at least some of the channels comprises spraying the cementitious particles as a dry particulate aerosol into an inlet face of the porous monolith article. In some preferred embodiment the cementitious particles prior to spraying are held as a dry particulate in a reservoir.

The method may thus preferably comprise spraying onto the gas-contacting surfaces, as a dry particulate aerosol, the cementitious particles. The method may comprise spraying a dry powder (i.e. dry cementitious particles) suspended in a gas (i.e. as an aerosol) onto the gas contacting surface of the plurality of channels on the monolith article. Suitable methods and apparatus for the spraying of dry powders onto monolith articles are described in, for example, WO2011/151711A1, WO2021028691A1 and WO2021/028692A1 (the entire contents of all of which are hereby incorporated by reference).

In particularly preferred embodiments, the step of depositing the cementitious particles as a dry powder onto the gas-contacting surface of at least some of the channels comprises drawing the cementitious particles as a dry particulate aerosol into an inlet face of the porous monolith article and along the channels by applying a vacuum to an outlet face of the porous monolith article.

In some embodiments the cementitious particles are deposited at a loading level of 1.5 to 15 g/l, optionally 3 to 10 g/l, optionally 4.5 to 9 g/l, optionally 4.5 g/l, or 6 g/l, or 9 g/l.

It is particularly preferred that the coated monolith article remains uncalcined prior to its installation into a device for the treatment of an exhaust gas.

One major advantage of the method of the present disclosure is that the monolith articles do not require a high-temperature treatment, such as calcination, after deposition of the dry particles to adhere the particles to the gas-contacting surfaces. Instead the cementitious particles are chemically reacted in situ to form a cemented coating. As used herein, 'high-temperature treatment' refers to processes carried out at temperatures typical for calcination of a filter, e.g. typically greater than 400°C or 500°C and is to be contrasted with processes carried out at elevated temperatures of up to or equal to 150°C.

The use of a chemical reaction step rather than a calcination step reduces the energy requirements for manufacture of the coated monolith article. In addition, the method avoids the potentially detrimental effects of high temperatures on any catalyst particles present in the monolith article, enabling the catalyst particles to be more effectively retained and adhered to the monolith article channels.

In a second aspect the present disclosure provides coated monolith article obtainable by the method of the first aspect described above.

In a third aspect the present disclosure provides a coated monolith article for the treatment of an exhaust gas, comprising a plurality of channels for the passage of an exhaust gas, each channel having a gas-contacting surface; the gas-contacting surface of at least some of the channels being at least partially coated by a cemented coating.

In particularly preferred embodiments, the cemented coating comprises or consists of hydrated calcium silicate, hydrated calcium aluminate, hydrated calcium aluminosilicate and/or hydrated calcium aluminoferrite.

In some embodiments, the cemented coating comprises or consists of geopolymer.

In preferred embodiments the coated monolith article is one or more of a catalysed soot filter (CSF), a selective catalytic reduction filter (SCRF), a lean NOx trap filter (LNTF), and a gasoline particulate filter (GPF).

In this specification the term "dry powder" refers to a particulate composition that is not suspended or dissolved in a liquid. It is not meant to necessarily imply a complete absence of all water molecules. The dry powder is preferably free-flowing.

In this specification the term "tapped density" refers to the tapped density of the powder as measured according to Method 1 of Section 2.9.35 of European Pharmacopoeia 7.0 with 1250 taps.

In this specification the term "g/l" (grams per litre) refers to the mass of a given substance divided by the volume of the monolith article.

In this specification the terms "loading" and "mass loading" when referencing the quantity of dry powder, refer to the mass of dry powder added to a monolith article and may be measured by weighing the monolith article before and after application of the dry powder to the monolith article.

In this specification the term "d50 (by volume)" refers to a d50 (by volume) measurement as measured by a Malvern Mastersizer^{®} 3000 with Aero s dispersion unit, available from Malvern Panalytical Ltd, Malvern, UK. Dispersion conditions: Air pressure = 2 barg, feed rate = 65%, hopper gap = 1.2 mm. Refractive index and absorbtion parameters set in accordance with instructions provided in the Malvern Mastersizer^{®} 3000 User Manual.

In this specification the term "vacuum generator" refers to an apparatus or combination of apparatus that function to produce a pressure reduction. Non-limiting examples of suitable apparatus include vacuum generators that operate on the venturi principle, vacuum pumps, for example rotary vane and liquid ring vacuum pumps, and regenerative blowers.

In this specification the term "pressure sensor" refers to an apparatus or combination of apparatus that function to measure an absolute and/or relative pressure. Non-limiting examples of suitable apparatus include pressure transducers which may be diaphragm pressure transducers. For example, a Wika^{®} P30 pressure transmitter, available from WIKA Alexander Wiegand SE & Co. KG, Klingenberg, Germany may be used.

In this specification the term "controller" refers to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc.

In this specification, ranges and amounts may be expressed as "about" a particular value or range. About also includes the exact amount. For example, "about 2 microns" means "about 2 microns" and also "2 microns." Generally, the term "about" includes an amount that would be expected to be within experimental error. The term "about" may include values that are within 5% less to 5% greater of the value provided. For example, "about 2 microns" means "between 1.9 microns and 2.1 microns".

In this specification the expression that a dry powder "consists of" means a dry powder that essentially consists of only the specified constituent(s), other than for unavoidable impurities as normally encountered as will be recognised by the person skilled in the art.

### Brief Description of the Drawings

The present disclosure will now be described, by way of example only, with reference to the accompanying drawings, in which:
Figure 1 is a schematic diagram of an apparatus for coating a monolith article with a dry powder according to the present disclosure;
Figure 2 is a flow diagram illustrating a method for manufacturing a coated monolith article according to the present disclosure incorporating a method for coating a monolith article using the apparatus of Figure 1; and
Figure 3 is a flow diagram illustrating further details of step S29 of Figure 2.

### Detailed Description

According to the present disclosure a method is provided for forming a coated monolith article for the treatment of an exhaust gas. The method comprises depositing cementitious particles as a dry powder onto one or more gas-contacting surfaces of at least some channels of a porous monolith article and then reacting the cementitious particles with a liquid or gaseous reagent in situ within the porous monolith article to produce the coated monolith article.

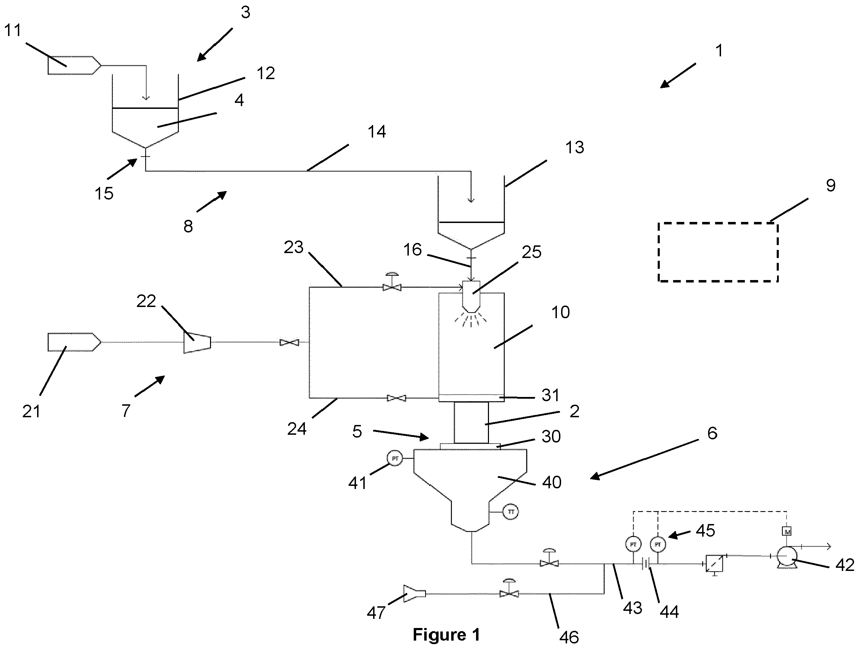

The step of depositing the cementitious particles onto the gas-contacting surfaces is carried out with the porous monolith article retained in a coating apparatus. Various coating apparatus may be used to deposit the cementitious particles. In the following description one preferred embodiment of coating apparatus 1 will be described by way of example with reference to Figure 1.

Figure 1 shows a schematic diagram of the coating apparatus 1, hereinafter simply referred to as apparatus 1'.

The apparatus 1 may comprise a reservoir 3 for containing the cementitious particles 4 in the form of a dry powder. A holder 5 may be provided for holding a monolith article 2. A vacuum generator 6 may be provided for establishing in use a primary gas flow through the porous structure of the monolith article 2 by applying a pressure reduction to an outlet face of the monolith article 2. A transport device 8 may be provided for transporting the cementitious particles 4 from the reservoir 3 to a spray device 7. The spray device 7 may be provided for receiving the cementitious particles 4 from the transport device 8 and spraying the cementitious particles 4 towards the inlet face of the monolith article 2. A controller 9 may be provided and configured to control operation of the apparatus 1.

The reservoir 3 may receive cementitious particles 4 from a dry powder inlet 11. The dry powder inlet 11 may be an output of an upstream bulk supply of the cementitious particles 4. For example the dry powder inlet 11 may be a conduit connected upstream to a further reservoir of the cementitious particles 4. The dry powder inlet 11 may represent a manual, semi-automatic or automatic re-filling of the reservoir 3 through a lid or opening of the reservoir 3.

The reservoir 3 may comprise one or more hoppers. The reservoir 3 may comprise one hopper. In the illustrated example of Figure 1, the reservoir 3 comprises a first hopper 12 and a second hopper 13. The second hopper 13 may be downstream of the first hopper 12 to receive cementitious particles 4 output from the first hopper 12. The one or more hoppers may be provided in separate housings. Alternatively, the one or more hoppers may be provided in a single housing. The one or more hoppers may comprise one or more chambers of a single container.

The reservoir 3 may comprise a dosing device 15. The dosing device 15 may dose the cementitious particles 4 by one or more of by weight, by volume, by particle number, by time. The dosing device 15 may be located at or near an outlet of the reservoir 3. The dosing device 15 may be located at or near an outlet of the one or more hoppers of the reservoir 3. The dosing device may be located at or near the outlet of the first hopper 12.

The dosing device 15 may be gravimetrically-fed with the cementitious particles 4 from the reservoir 3.

The dosing device 15 may be a loss in weight feeder. Non-limiting examples of suitable dosing devices include the Coperion^{®} K-Tron Type K2-ML-T35 Gravimetric twin screw feeder available from Coperion GmbH, Stuttgart, Germany and the All-Fill^{®} Series S1 Micro-Fill available from All-Fill International Ltd, Sandy, UK.

The transport device 8 transports the cementitious particles 4 from the reservoir 3 to the spray device 7. The transport device 8 may gravimetrically feed the cementitious particles 4 at least part way towards the spray device 7.

The transport device 8 may comprise one or more components. The transport device 8 may comprise one or more conduits, for example, passages, pipes, hoses, etc.

Where the reservoir 3 comprises more than one hopper the transport device 8 may transport the cementitious particles 4 between the hoppers. The transport device 8 may gravimetrically feed the cementitious particles 4 between the hoppers. The transport device 8 may comprise a first conduit 14 extending between the first hopper 12 and the second hopper 13. The first conduit 14 may extend from a first housing to a second housing. Alternatively, the first conduit 14 may extend from a first chamber to a second chamber of a single container. The cementitious particles 4 may be gravimetrically fed along the first conduit 14. The transport device 8 may comprise a second conduit 16 extending from the second hopper 13 to the spray device 7.

The spray device 7 is provided for receiving the cementitious particles 4 from the transport device 8 and spraying the cementitious particles 4 towards the inlet face of the monolith article 2. The spray device 7 may comprise a secondary gas flow generator for generating a secondary gas flow that may be used to spray the cementitious particles 4 towards the inlet face of the monolith article 2.

The spray device 7 may further comprise one or more outlets for discharging the cementitious particles 4 towards the inlet face of the monolith article 2. The one or more outlets of the spray device may comprise an aperture size of 1 to 10 mm. The one or more outlets may be provided in one or more nozzles. Each of the one or more nozzles may comprise one or more spray outlets. In the illustrated example of Figure 1 a single nozzle 25 is provided which comprises a plurality of spray outlets.

The secondary gas flow generator may comprise a compressed gas generator. In the illustrated example of Figure 1 the secondary gas flow generator comprises a compressed air generator which may comprise a compressor 22. The compressor 22 may receive air from an air inlet 21 and supply compressed air to the one or more outlets of the spray device 7 via a feed line 23. A return line 24 may be provided. Valves and controls necessary for operation may be provided as will be known to the person skilled in the art.

An interconnection between the transport device 8 and the spray device 7 may be provided at which interconnection the cementitious particles 4 may be transferred into the spray device 7 from the transport device 8. The interconnection may be provided at or near the one or more outlets of the spray device 7. In one example, the interconnection may be provided in the nozzle 25. Alternatively, the interconnection may be provided at or near the reservoir 3, for example at or near the second hopper 13 of the reservoir 3. In one example, the interconnection is a fluid connection between the feed line 23 and the second conduit 16. For example, the secondary gas flow of the spray device 7 may be fluidly connected with the second conduit 16 at or near an outlet of the second hopper 13 to fluidize the cementitious particles 4 to assist transport of the cementitious particles 4 in the form of a dry powder along at least a portion of the second conduit 16. For example, the secondary gas flow of the spray device 7 may entrain the cementitious particles 4 from the second conduit 16. For example, the secondary gas flow of the spray device 7 may produce a suction force in the second conduit to draw the cementitious particles 4 into the secondary gas flow.

In one example the spray device 7 comprises a compressed air gun. A non-limiting example of a suitable compressed air gun is the STAR Professional gravity feed spray gun 1.4mm, part no. STA2591100C.

The holder 5 may function to maintain the monolith article 2 in a stationary position during deposition of the cementitious particles 4. The holder 5 may grip an upper and/or a lower end of the monolith article 2. The holder 5 may comprise an inflatable upper seal bladder 31 (also called an upper inflatable collar) and/or an inflatable lower seal bladder 30 (also called a lower inflatable collar) that support respective upper and lower ends of the monolith article 2. The inflatable upper seal bladder 31 and the inflatable lower seal bladder 30 may contact and/or engage with an exterior surface of the monolith article 2. Each may form a liquid or air tight seal around the monolith article 2. The inflatable upper seal bladder 31 and the inflatable lower seal bladder 30 may be supported by one or more housings (e.g. supported by an internal wall of the one or more housings).

The apparatus 1 may be configured such that the monolith article 2 is located in the holder 5 in a vertical orientation with the inlet face of the monolith article 2 uppermost. At least a portion of the spray device 7 may be located vertically above the inlet face. A spray direction of the spray device 7 may be co-axial with a longitudinal axis of the monolith article 2. The spray direction and the longitudinal axis of the monolith article 2 may be coincident.

The apparatus 1 may further comprise a flow conduit 10 located between the spray device 7 and the inlet face of the monolith article 2. The flow conduit 10 may function to constrain and channel the primary gas flow towards the inlet face of the monolith article 2. The flow conduit 10 may function to align the primary gas flow such that a flow direction of the primary gas flow when it contacts the inlet face of the monolith article 2 is normal to the inlet face.

The flow conduit 10 may be empty so as to provide an unimpeded flow path between the spray device 7 and the inlet face of the monolith article 2. Alternatively, the flow conduit 10 may comprise a flow conditioner interposed between the spray device 7 and the inlet face of the monolith article 2, the flow conditioner acting to promote dispersion of the cementitious particles 4. For example, the flow conditioner may comprise one or more of a static mixer, a mesh, a sieve, a baffle, and an orificed plate.

The flow conduit 10 may comprise a tube. The flow conduit 10 may comprise a cross-sectional shape that matches the cross-sectional shape of the inlet face of the monolith article 2. The flow conduit 10 may comprise a size that matches the size of the inlet face of the monolith article 2.

The spray device 7 may extend into the flow conduit 10. The one or more outlets of the spray device 7 may be located within the flow conduit 10. For example, the nozzle 25 may be located within an upper region of the flow conduit 10. The nozzle 25 may be located coincident with a longitudinal axis of the monolith article 2.

The inlet face of the monolith article 2 may be located from 10 to 80 cm, preferably 15 to 20 cm from the spray device, for example from the nozzle 25 of the spray device 7. Additionally or alternatively the spray device, for example from the nozzle 25 of the spray device 7, may be located at a distance from the inlet face of the monolith article 2 that is up to 4 times a diameter of the inlet face of the monolith article 2.

The vacuum generator 6 is provided for establishing in use the primary gas flow through the porous structure of the monolith article 2 by applying a pressure reduction to the outlet face of the monolith article 2. The vacuum generator 6 may comprise a vacuum cone 40 that may define a funnel that engages the outlet face of the monolith article 2. The inflatable lower seal bladder 30 may form a seal between the outlet face of the monolith article 2 and the vacuum cone 40. The vacuum generator 6 may comprise a vacuum pump 42 connected to the flow cone by a conduit 43. The vacuum pump 42 may be controlled to control the volumetric flow rate of the primary gas flow.

The vacuum generator 6 may be provided with a volumetric flow rate sensor. The volumetric flow rate sensor may be an orifice plate 44 in combination with pressure sensors 45 located along the conduit 43. The vacuum generator 6 may comprise a bypass conduit 46 extending to an intake 47.

The apparatus 1 may further comprises a pressure sensor 41 for monitoring a back pressure of the monolith article 2. A single pressure sensor 41 may be used. The single pressure sensor 41 may be located in the vacuum generator 6, preferably in a holder or other housing, for example the vacuum cone 40, of the vacuum generator.

The controller 9 controls operation of at least the vacuum generator 6 and the spray device 7. In Figure 1 operative connections between the controller 9 and a remainder of the apparatus 1 are omitted for clarity. However, the person skilled in the art would be aware that necessary connections of any suitable means may be provided. Such connections may be wired or wireless.

The controller 9 may be configured to control the transfer of the cementitious particles 4 from the reservoir 3 to the spray device 7 by the transport device 8 independently of controlling the primary gas flow produced by the vacuum generator 6. For example the controller 9 may control operation of the dosing device 15.

The controller 9 may be configured to control spraying of the cementitious particles 4 towards the inlet face of the monolith article 2 independently of controlling the primary gas flow. Use of the term 'independently' in the present specification refers to the ability of the controller 9 to control each of the variables of the spraying of the cementitious particles 4 and the primary gas flow individually and irrespective of the status of the other variable. For example the controller 9 may establish the primary gas flow without simultaneously spraying the cementitious particles 4. For example the controller 9 may increase or decrease the rate of spraying of the cementitious particles 4 without altering the volumetric flow rate of the primary gas flow. For example, the controller 9 may increase or decrease the volumetric flow rate of the primary gas flow without altering the rate of spraying of the cementitious particles 4. For example the controller 9 may control operation of the spray device 7 independently of controlling operation of the vacuum pump 42.

The controller 9 may be configured to operate the vacuum generator 6 to establish the primary gas flow before the cementitious particles 4 is transferred to the spray device 7 and sprayed towards the inlet face of the monolith article 2.

The controller 9 may be configured to control the secondary gas flow generator, for example the compressor 22, independently of the vacuum generator 6. The controller 9 may be configured to operate the vacuum generator 6 to maintain the primary gas flow as a continuous gas flow through the porous structure and to operate the secondary gas flow generator, for example the compressor 22, for only a portion of a period of the primary gas flow.

The controller 9 may be configured to control the vacuum generator 6 to control a level of the pressure reduction applied to the outlet face of the monolith article 2 independently of controlling the transport device 8 and/or the spray device 7 to control a speed or mass rate of the cementitious particles 4 sprayed towards the inlet face of the monolith article 2.

The controller 9 may be configured to stop the spraying of the cementitious particles 4 towards the inlet face of the monolith article 2 when a pre-determined back pressure of the monolith article 2 is reached, for example as detected by the pressure sensor 41. The pre-determined back pressure may be an absolute back pressure or alternatively may be a relative back pressure.

Alternatively, the controller 9 may be configured to stop the spraying of the cementitious particles 4 towards the inlet face of the monolith article 2 when a pre-determined total spraying time is reached.

The apparatus 1 may be used to coat a monolith article 2 with cementitious particles 4 comprising or consisting of inorganic particles.

In some embodiments the cementitious particles 4 comprise or consist of a silicate, an aluminate, or an aluminosilicate. In some particularly preferred embodiments the cementitious particles 4 comprise or consist of calcium silicate, calcium aluminate, calcium aluminosilicate and/or calcium aluminoferrite.

In some embodiment the cementitious particles 4 comprise or consist of geopolymer precursor particles. In some particularly preferred embodiments the geopolymer precursor particles comprise or consist of an aluminosilicate, a pozzolan, calcined clay, metakaolin, fly ash, blast furnace slag, or silica fume.

The cementitious particles 4 may consist of a single compound or a mixture of compounds. For example, the cementitious particles 4 may comprise a mixture of two or more of calcium silicate, calcium aluminate, calcium aluminosilicate, calcium aluminoferrite and geopolymer precursor particles. In another example, the cementitious particles 4 may comprise a mixture of two or more forms of any of calcium silicate, calcium aluminate, calcium aluminosilicate and calcium aluminoferrite, e.g. the mixture may comprise two of more of alite, belite and wollastonite.

In some embodiments the cementitious particles 4 have a tapped density of 1 to 3 g/cm³, optionally 1.5 to 2.5 g/cm³, optionally about 2 g/cm³.

In some embodiments the cementitious particles 4 have a d50 (by volume) of 5 to 60 microns.

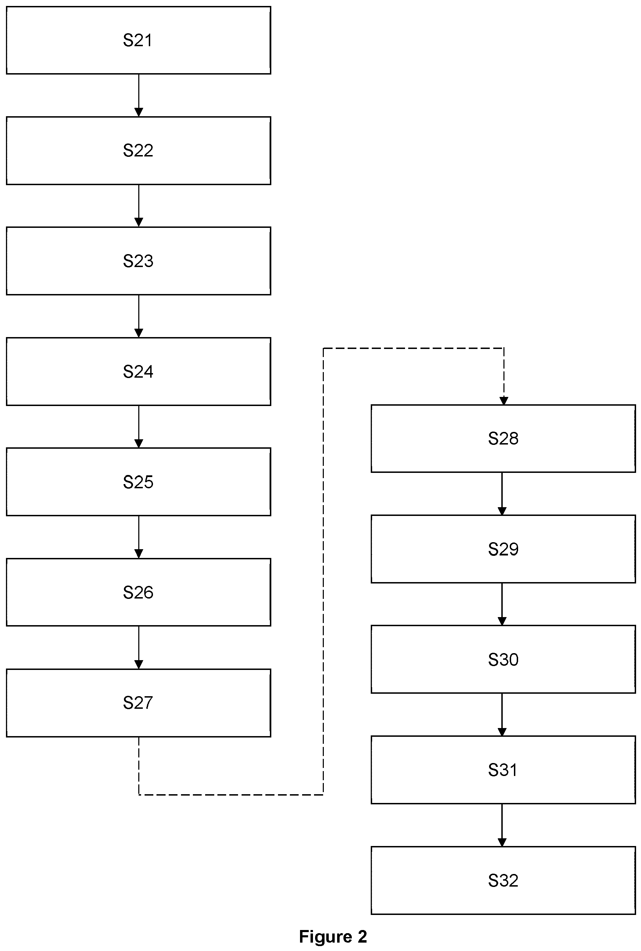

An example of a method of processing a monolith article 2 in accordance with the present disclosure will now be described with reference to Figure 2 which shows a flow diagram illustrating a method for manufacturing a monolith article 2 incorporating use of the apparatus 1. By way of example only the method will described with reference to a monolith article 2 provided with a catalytic coating.

In step S21 a catalytic slurry is prepared by methods as known in the art.

In step S22 a washcoat is prepared from the catalytic slurry by methods as known in the art. The washcoat may be, for example, a hydrocarbon trap, a three-way catalyst (TWC), a NOx absorber, an oxidation catalyst, a selective catalytic reduction (SCR) catalyst, a lean NOx catalyst and combinations of any two or more thereof.

In step S23 the washcoat is dosed and applied to a bare monolith article 2 by methods as known in the art. For example the washcoat may be applied to a first face of the monolith article 2 (e.g. an upper face) and an opposite, second face (e.g. a lower face) of the monolith article 2 may be subjected to at least a partial vacuum to achieve movement of the washcoat through the porous structure of the monolith article 2. The monolith article 2 may be coated in a single dose wherein washcoat may be applied to the monolith article 2 in a single step with the monolith article 2 remaining in a single orientation. Alternatively, the monolith article 2 may be coated in two doses. For example, in a first dose the monolith article 2 may be in a first orientation with a first face uppermost and a second face lowermost. A coating may be applied to the first face and coats a portion of the length of the monolith article 2. The monolith article 2 may then be inverted so that the second face is uppermost. A coating may then be applied to the second face in order to coat the portion of the monolith article 2 that was uncoated by the first dose. Beneficially, a two-dose process may allow different coatings to be applied to each end of the monolith article 2.

In step S24 the monolith article 2 may be dried.

In step S25 the monolith article 2 may be calcined by methods as known in the art.

In optional step S26 the back pressure of the monolith article 2 before processing may be measured.

In optional step S27 the monolith article 2 may be placed in stock to await further processing. Thereafter, in step S28 the monolith article 2 may be removed from stock and passed for further processing. Alternatively, the monolith article 2 may be further processed immediately, i.e. by proceeding directly from step S26 to step S29.

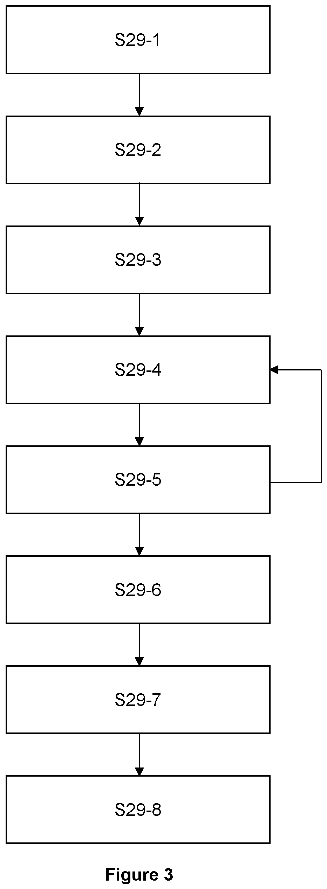

In step S29 the monolith article 2 is processed to deposit the cementitious particles 4 as a dry powder onto one or more gas-contacting surfaces of at least some channels of the monolith article 2, as will be described in further detail below with reference to Figure 3.

In step S30 the cementitious particles 4 are reacted with a liquid or gaseous reagent in situ within the monolith article 2 to produce a coated monolith article, as will be described in further detail below.

In optional step S31 the back pressure of the monolith article 2 after the processing and reaction steps may be measured.

In step S32 the finished monolith article 2 may be readied for delivery to a customer.

Beneficially, the processing method of the present disclosure does not require a high-temperature treatment, such as calcination, to be performed on the monolith article 2 after steps 29 or 30. Instead the cementitious particles 4 are chemically reacted in situ to form a cemented coating.

Figure 3 shows a flow diagram illustrating the process step S29 of Figure 2 comprising the deposition of the cementitious particles 4.

In step S29-1 the monolith article 2 may be loaded into the holder 5. The monolith article 2 may be held in a stationary position during processing. The monolith article 2 may be gripped by the holder 5 at an upper and/or a lower end of the monolith article 2. The inflatable upper seal bladder 31 and the inflatable lower seal bladder 30 may be inflated to contact and/or engage with the exterior surface of the monolith article 2. The monolith article 2 may be held in a vertical orientation with the inlet face of the monolith article 2 uppermost. Operation of the holder 5, for example inflation of the inflatable upper seal bladder 31 and the inflatable lower seal bladder 30 may be controlled by the controller 9.

In step S29-2 the vacuum generator 6 may activated by the controller 9 to establish the primary gas flow through the monolith article 2. Preferably, the primary gas flow is established before the cementitious particles 4 are transferred to the spray device 7 and sprayed towards the inlet face of the monolith article 2. A level of the pressure reduction generated by the vacuum generator 6 may be controlled by the controller 9 independently of a speed or mass rate of the transfer of the cementitious particles 4 from the reservoir 3 to the spray device 7. The primary gas flow may have a volumetric flow rate of 10 m³/hr to 5,000 m³/hr, preferably 400 m³/hr to 2,000 m³/hr, preferably 600 m³/hr to 1000 m³/hr.

In step S29-3 the back pressure of the monolith article 2 may be measured while the primary gas flow is established but before the secondary gas flow is established. The back pressure may be measured by use of the pressure sensor 41. The back pressure measurement in step S29-3 may be in addition to, or in place of the back pressure measurement of step S26. Alternatively, the back pressure measurement of step S26 may be used in place of the back pressure measurement of step S29-3. The back pressure measurement of step S26 and/or the back pressure measurement of step S29-3 may be used by the controller 9 as a measure of a first back pressure of the monolith article 2 prior to processing.

In step S29-4 the cementitious particles 4 are sprayed, as a dry powder, at the inlet face of the monolith article 2 by the spray device 7. During spraying of the cementitious particles 4 the cementitious particles 4 may be supplied to the spray device 7, as a dry powder, by the transport device 8.

The spraying of the cementitious particles 4 towards the inlet face of the monolith article 2 is preferably controllable by the controller 9 independently of establishing and controlling the primary gas flow.

During step S29-4 the secondary gas flow, for example supplied by the compressor 22, which is separate to the primary gas flow, may be used to transfer the cementitious particles 4 from the reservoir 3 to the spray device 7. Preferably the secondary gas flow is controllable by the controller 9 independently of the primary gas flow. For example the controller 9 may control operation of the compressor 22 and/or the valves and/or the nozzle 25 of the spray device 7 independently of controlling operation of the vacuum pump 42. The cementitious particles 4 may be sprayed towards the inlet face of the monolith article 2 by use of the secondary gas flow. The secondary gas flow may comprise a flow of compressed gas, preferably air.

During step S29-4 the primary gas flow is preferably maintained as a continuous flow. During step S29-4 the secondary gas flow may be applied as a single burst or a plurality of intermittent bursts.

In step S29-5 the back pressure of the monolith article 2 may be monitored. The back pressure may be monitored by use of the pressure sensor 41. The controller 9 may be configured to stop the spraying of the cementitious particles 4 towards the inlet face of the monolith article 2 when a pre-determined back pressure is reached. If the pre-determined back pressure has not yet been reached then the controller 9 be configured to return to step S29-4 and continue spraying of the cementitious particles 4. This feedback may be continuous and need not involve any pause in the spraying of the cementitious particles 4, i.e. the controller 9 may continuously monitor the back pressure of the monolith article 2 as spraying of the cementitious particles 4 is on-going.

The pre-determined back pressure may be an absolute back pressure. The absolute back pressure may be between 20-180 mbar at a flowrate of 600 m³/hr.

Alternatively, the pre-determined back pressure may be a relative back pressure. For example a back pressure relative to the first back pressure of the monolith article 2 prior to processing measured in step S26 and/or step S29-3 may be used. The back pressure may be measured as a percentage of the first back pressure. The predetermined back pressure when spraying of the cementitious particles 4 is stopped may be from 105% to 200%, preferably 125% to 150%, of the first back pressure.

In addition or alternatively, spraying of the cementitious particles 4 towards the inlet face of the monolith article 2 may be stopped when a pre-determined total spraying time is reached. The pre-determined total spraying time may be from 1 to 60 seconds, preferably from 1 to 20 seconds, preferably about 10 seconds.

The controller 9 may be configured to stop the spraying of the cementitious particles 4 towards the inlet face of the monolith article 2 when either a pre-determined total spraying time or a pre-determined back pressure of the monolith article 2 is first reached or a target mass of the cementitious particles 4 has been sprayed towards the inlet face of the monolith article 2.

In step S29-6 the spraying of the cementitious particles 4 is stopped. For example this may be achieved by the controller 9 stopping transfer of the cementitious particles 4 by the transport device 8 and/or by stopping the secondary gas flow of the spray device 7. Preferably in step S29-6 the primary gas flow is maintained through the porous structure of the monolith article 2 for a time period after the stopping of the spraying of the cementitious particles 4. The controller 9 may be configured to operate the vacuum generator 6 for a time period after the stopping of the spraying of the cementitious particles 4.

Optionally, in step S29-6 the quantity of cementitious particles 4 delivered towards the inlet face of the monolith article 2 may be measured. The controller 9 may be configured to determine the quantity of the cementitious particles 4 delivered from signal outputs from the dosing device 15, for example from an output from the loss in weight feeder.

The method may be configured to deliver a maximum loading of the filter of 10 to 40 g/l, optionally 15 to 30 g/l, optionally about 20 g/l of the cementitious particles 4.

In step S29-7 the primary gas flow through the monolith article 2 is stopped. This may be achieved by the controller 9 stopping the vacuum generator 6, i.e. stopping the vacuum pump 42. Alternatively, this may be achieved by the controller operating valves of the vacuum generator 6 to divert the suction through the bypass conduit 46 to draw air in through intake 47. This may avoid the need to stop the vacuum pump 42 between processing of successive monolith articles 2 which may lead to a faster cycle time.

In step S29-8 the monolith article 2 may be retained in the holder 5 in readiness for step S30 in embodiments in which the step of reacting the cementitious particles 4 is performed on the same apparatus 1, i.e. the coating apparatus 1. Alternatively, in step S29-8 the monolith article 2 may be unloaded from the holder 5 in embodiments in which the step of reacting the cementitious particles 4 is performed on a separate, optionally dedicated, treatment apparatus as discussed below. The unloading step may comprise, for example, deflating the inflatable upper seal bladder 31 and the inflatable lower seal bladder 30. The monolith article 2 may then be removed.

As noted above, in step S30 the cementitious particles 4 are reacted with a liquid or gaseous reagent in situ within the monolith article 2.

In some embodiments the cementitious particles 4 may comprise or consist of hydraulic cementitious particles 4 which are reacted hydrating the hydraulic cementitious particles 4. In such embodiments the liquid or gaseous reagent comprises or consists of water molecules. The water molecules may be in the form of water in a gaseous or liquid state.

In some embodiments the channels of the monolith article 2 are penetrated with water molecules in a liquid phase. For example, liquid water may be poured into the monolith article 2 or the monolith article 2 may be dipped into a water bath.

In more preferred embodiments the water molecules in the liquid phase may comprise or consist of an aerosolized mist of water which may be sprayed into the monolith article 2. Additionally or alternatively, the aerosolized mist of water may be actively drawn along the channels and/or through the monolith article 2, for example by use of a vacuum applied to an outlet face of the monolith article 2. The use of an aerosolized mist has been found beneficial compared to pouring or dipping applications since it is less prone to disturbing the coating of the cementitious particles 4 prior to the cementing of the cementitious particles 4. This helps to produce an improved integrity of the cemented coating and improved coverage of the gas-contacting surfaces by the cemented coating.

The spraying and/or drawing of the aerosolized mist of water may be performed using the coating apparatus 1 used to deposit the cementitious particles 4 or by using a separate apparatus. In some preferred embodiments, the monolith article 2 is retained in the holder 5 after completion of the deposit of cementitious particles 4 and the aerosolized mist is sprayed from a water nozzle located adjacent the nozzle 25. Alternatively, the nozzle 25 for the dry powder and the nozzle for the water may be interchanged manually, semi-automatically or automatically between steps S29 and S30.

In a particularly preferred embodiment the step of hydrating the cementitious particles 4 comprises exposing the channels of the monolith article 2 to water molecules in a gaseous phase, for example within a humidifying chamber. The water molecules in the gaseous phase may comprise or consist of a humidified gas, for example humidified air.

The humidified gas may be actively blown and/or drawn through the monolith article 2, for example using an external pump and/or vacuum and may be applied to one or more faces of the monolith article 2. Alternatively, the humidified gas may be diffused and/or convected into the monolith article 2.

The use of water in a gaseous phase, especially in the form of humidified air, has been found particularly beneficial in minimising disturbance of the coating of the cementitious particles 4 prior to the cementing of the cementitious particles 4. This helps to produce an improved integrity of the cemented coating and improved coverage of the gas-contacting surfaces by the cemented coating.

The humidified gas may have a relative humidity (RH) of greater than or equal to 60%, or 65%, or 70%, or 75%, or 80%, or 85%, or 90%, or 95%.

In a particularly preferred embodiment, hydrating the cementitious particles 4 comprises a hydrothermal treatment; for example placing the monolith article within a hydrothermal oven. For example, the hydrothermal treatment may comprise subjecting the monolith article (with the deposited cementitious particles 4) to an ambient temperature of greater than or equal to 40°C, or 60°C, or 80°C, or 100°C. Additionally or alternatively, the hydrothermal treatment may comprise subjecting the monolith article 2 to an ambient temperature of up to or equal to 80°C, or 100°C, or 120°C, or 150°C.

The hydrothermal treatment may comprise exposing the monolith article 2 to the humidified gas for 2 to 24 hours, preferably 4 to 12 hours, more preferably 6 to 8 hours.

In some embodiments the cementitious particles 4 may comprise or consist of geopolymer precursor particles. The step of reacting such cementitious particles 4 with the liquid or gaseous reagent may comprise chemically reacting the geopolymer precursor particles.

The liquid or gaseous reactant used may comprise or consist of an alkali, optionally an alkali polysilicate, optionally a sodium or potassium silicate. The reactant may be provided in a liquid or gaseous form using the application modes discussed above, e.g., pouring, dipping, aerosolised mist, or gas.

### EXAMPLES

### Comparative Example A

A silicon carbide wall-flow filter substrate (MSC-2SR-HAC 165.0 X 140.5mm 300/6, 3L type, obtained from NGK Insulators, LTD) was loaded with Aeroxide^{®} Alu130 (a fumed alumina) using the method and apparatus described in this specification. The diameter of the flow conduit was the same as the inlet face of the filter. A primary gas flow of 300 m³/h of air was pulled through the filter using a downstream regenerative blower. Back pressure was monitored with a Wika^{®} P30 pressure transmitter located below the filter. The powder was dispersed into the primary gas flow using a STAR Professional gravity feed spray gun 1.4 mm part no. STA2591100C. The 15 STAR Professional gravity feed spray gun was mounted 100 mm from the inlet face of the filter. The back pressure parameter was used to determine the point of stopping of spraying of the refractory powder. The powder loading amount was 1.5 g/L prior to calcination. After loading was completed the filter was calcined at 500°C for 1 h.

### Example B

Example B is prepared in the same manner as Comparative Example A, except that a calcium silicate powder (dso = 6 µm, density = 2800 g/L) was used. The filter was loaded with 3 g/L powder. The filter was not calcined after powder loading. The filter thus prepared was then hydrated at 95% H₂O humidity at 80°C for 6 hours in air.

### Example C

Example C is prepared in the same manner as Example B, except that the filter was loaded with 6 g/L powder.

### Example D

Example C is prepared in the same manner as Example B, except that the filter was loaded with 9 g/L powder.

### Example E

Example E is prepared in the same manner as Example B, except that a mixture of calcium silicates was used. The calcium silicates mixture consisted of mono-, di- and tricalcium silicate species where calcium was abundant in 10-22% in the form CaO and SiO₂ was abundant in about 78% or greater. The particle size distribution of the mixture was tri modal with a particle size range of from 4 µm to 53 µm). The filter was loaded with 8 g/L of powder mixture. The filter thus prepared was then hydrated at 95% H₂O humidity at 80°C for 6 hours in air.

### Filtration Efficiency

Filter samples were tested using a Cambustion^{®} Diesel Particulate Filter Testing System available from Cambustion Ltd. of Cambridge, UK with the following test conditions:
a) Stabilisation - 250 kg/h mass flow, 50°C, 5 mins
b) Warm up - 250 kg/h mass flow, 240°C, 5 mins
c) Weighing - filter removed from rig and weighed
d) Warm up - filter returned to rig; 250 kg/h mass flow, 240°C, 5 mins
e) Loading Phase - 250 kg/h mass flow, 240°C, loading rate: 2 g/h until 2 g/L soot load
f) Weighing - filter removed from rig and weighed.

The fuel used during the test is: Carcal RF-06-08 B5.

During the test, the particle counter continuously samples downstream of the filter. Immediately before and after a batch of filters are tested, an "Upstream" test is run on the rig to allow the particle counter to sample the raw soot production from the rig. The Upstream test is 20 minutes long and uses the same conditions as the Loading Phase above. Comparing the average of the two Upstream tests (before and after filter testing) with the data from the Loading phase of the filter test gives the filtration efficiency.

The filtration efficiency data were collected 50 s after the start of the tests.

Table 1 compares the filtration efficiency of the wall-flow filter substrate (MSC-2SR-HAC 165.0 X 140.5mm 300/6, 3L type, obtained from NGK Insulators, LTD, no powder loaded), Comparative Example A, Example B, Example C, and Example D.

**TABLE 1**

| **Sample** | **Powder Used and Loading (g/L)** | **Filtration Efficiency (%) at 50s** |
|---|---|---|
| Wall-flow filter substrate | None | 56 |
| Comparative Example A | Alu130, 1.5 g/L | 99 |
| Example B | Calcium silicate, 3 g/L | 83 |
| Example C | Calcium silicate, 6 g/L | 88 |
| Example D | Calcium silicate, 9 g/L | 92 |

### Gas Attrition Test

Gas attrition tests were performed with Comparative Example A, and Example E, using a high-pressure air nozzle operating with a flow rate of 425 L/min, at a distance of 0.5 inch from the face of the filter, moving across the face surface of the filter at 6.7 mm/s in a zigzag pattern to move across the whole face of the filter. The attrition treatment was performed from both the inlet and outlet faces of the filter. Samples were weighed after they were dried in an oven at 115°C for 30 minutes before and after the attrition treatment. Filtration efficiency of the samples thus obtained were measured, as shown in Table 2.

### Water Tolerance Test

A sample from Example E was fully submerged in a container of around 6 L of deionised water for approximately 10 s before removal from the water, shaking of the part to remove excess water and drying in an oven at 115°C for around 45 min. Filtration efficiency of the sample obtained was measured, as shown in Table 2.

Another sample of Example E was fully submerged in a container of around 6 L of deionised water for approximately 10 s before removal from the water, shaking of the part to remove excess water and drying in an oven at 115°C for around 45 min. The same treatment was repeated two more times. Filtration efficiency of the sample thus obtained was measured, as shown in Table 2.

**TABLE 2**

| **Sample** | **Treatment to the Sample** | **Filtration Efficiency (%) at 50 s** |
|---|---|---|
| Comparative Example A | None | 99 |
| Comparative Example A | Gas attrition | 57 |
| Example E | None | 86 |
| Example E | Gas attrition | 85 |
| Example E | Water treatment | 85 |
| Example E | Water treatment x 3 | 86 |

### Examples F-1 to F-8

Examples F-1 to F-8 were prepared in the same manner as Example E, except that the samples were hydrated at various conditions described in Table 3 after they were loaded with the powder mixture. Table 3 also shows the mass loss of the samples after gas attrition.

**TABLE 3**

| **Sample** | **Temperature (°C)** | **Humidity (%)** | **Duration (h)** | **% Mass Loss After Gas Attrition** |
|---|---|---|---|---|
| Comparative Example A | | | | 95 |
| Example F-1 | 60 | 95 | 6 | 7 |
| Example F-2 | 80 | 95 | 6 | 5 |
| Example F-3 | 100 | 95 | 6 | 5 |
| Example F-4 | 80 | 95 | 12 | 4 |
| Example F-5 | 80 | 95 | 24 | 3 |
| Example F-6 | 80 | 65 | 6 | 15 |
| Example F-7 | 80 | 75 | 6 | 14 |
| Example F-8 | 80 | 85 | 6 | 9 |

The invention will now be described in various embodiments:
1. A method of forming a coated monolith article for the treatment of an exhaust gas, the method comprising the steps of:
   retaining a porous monolith article in a coating apparatus, the porous monolith article comprising a plurality of channels for the passage of an exhaust gas, each channel having a gas-contacting surface;
   depositing cementitious particles as a dry powder onto the gas-contacting surface of at least some of the channels; and
   reacting the cementitious particles with a liquid or gaseous reagent in situ within the porous monolith article to provide the coated monolith article.
2. The method according to embodiment 1, wherein the monolith article is a monolith filter, optionally a wall-flow filter, and/or a catalyst article, optionally a catalytic wall-flow filter.
3. The method of embodiment 1 or embodiment 2, wherein the cementitious particles are inorganic particles.
4. The method of any preceding embodiment, wherein the cementitious particles comprise or consist of a silicate, an aluminate, or an aluminosilicate.
5. The method of any preceding embodiment, wherein the cementitious particles comprise or consist of hydraulic cementitious particles and the step of reacting the cementitious particles with the liquid or gaseous reagent comprises hydrating the hydraulic cementitious particles.
6. The method of embodiment 5, wherein the hydraulic cementitious particles comprise or consist of calcium silicate, calcium aluminate, calcium aluminosilicate and/or calcium aluminoferrite.
7. The method of embodiment 5 or embodiment 6, wherein the liquid or gaseous reagent comprises or consists of water molecules.
8. The method of embodiment 7, wherein the step of hydrating the hydraulic cementitious particles comprises penetrating the channels with water molecules in a liquid phase.
9. The method of embodiment 8, wherein the water molecules in the liquid phase comprise an aerosolized mist and penetrating the channels with the water molecules optionally comprises spraying the aerosolized mist into the porous monolith article and/or drawing the aerosolized mist through the porous monolith article; and optionally the spraying and/or drawing of the aerosolized mist is performed using the coating apparatus.
10. The method of any one of embodiments 7 to 9, wherein the step of hydrating the hydraulic cementitious particles comprises exposing the channels to water molecules in a gaseous phase; optionally within a humidifying chamber.
11. The method of embodiment 10, wherein the water molecules in the gaseous phase comprise a humidified gas, optionally humidified air.
12. The method of embodiment 11, wherein the humidified gas is actively blown and/or drawn through the porous monolith article, optionally using an external pump and/or vacuum.
13. The method of embodiment 11 or embodiment 12, wherein the humidified gas is diffused and/or convected into the porous monolith article.
14. The method of any one of embodiments 11 to 13, wherein the humidified gas has a relative humidity (RH) of greater than or equal to 60%, or 65%, or 70%, or 75%, or 80%, or 85%, or 90%, or 95%.
15. The method of any one of embodiments 5 to 14, wherein the step of hydrating the hydraulic cementitious particles comprises a hydrothermal treatment; optionally within a hydrothermal oven.
16. The method of embodiment 15, wherein the hydrothermal treatment comprises subjecting the porous monolith article to an ambient temperature of greater than or equal to 40°C, or 60°C, or 80°C, or 100°C.
17. The method of embodiment 15 or embodiment 16, wherein the hydrothermal treatment comprises subjecting the porous monolith article to an ambient temperature of up to or equal to 80°C, or 100°C, or 120°C, or 150°C.
18. The method of any one of embodiments 15 to 17, wherein the hydrothermal treatment comprises exposing the porous monolith article to the humidified gas for 2 to 24 hours, optionally 4 to 12 hours, optionally 6 to 8 hours.
19. The method of any preceding embodiment, wherein the cementitious particles comprise or consist of geopolymer precursor particles and the step of reacting the cementitious particles with the liquid or gaseous reagent comprises chemically reacting the geopolymer precursor particles.
20. The method of embodiment 19, wherein the geopolymer precursor particles comprise or consist of an aluminosilicate, a pozzolan, calcined clay, metakaolin, fly ash, blast furnace slag, or silica fume.
21. The method of embodiment 19 or embodiment 20, wherein the liquid or gaseous reactant comprises or consists of an alkali, optionally an alkali polysilicate, optionally a sodium or potassium silicate.
22. The method of any preceding embodiment, wherein the cementitious particles have a tapped density of 1 to 3 g/cm³, optionally 1.5 to 2.5 g/cm³, optionally about 2 g/cm³.
23. The method of any preceding embodiment, wherein the cementitious particles have a d50 (by volume) of 5 to 60 microns.
24. The method of any preceding embodiment, wherein the step of reacting the cementitious particles with the liquid or gaseous reagent is performed prior to the monolith article being installed into a device for the treatment of an exhaust gas.
25. The method of any preceding embodiment, wherein the step of depositing the cementitious particles as a dry powder onto the gas-contacting surface of at least some of the channels comprises spraying the cementitious particles as a dry particulate aerosol into an inlet face of the porous monolith article; and optionally wherein the cementitious particles prior to spraying are held as a dry particulate in a reservoir.
26. The method of any preceding embodiment, wherein the step of depositing the cementitious particles as a dry powder onto the gas-contacting surface of at least some of the channels comprises drawing the cementitious particles as a dry particulate aerosol into an inlet face of the porous monolith article and along the channels by applying a vacuum to an outlet face of the porous monolith article.
27. The method of any preceding embodiment, wherein the cementitious particles are deposited at a loading level of 3 to 10 g/l, optionally 4.5 to 9 g/l, optionally 4.5 g/l, or 6 g/l, or 9 g/l.
28. The method of any preceding embodiment, wherein the coated monolith article remains uncalcined prior to its installation into a device for the treatment of an exhaust gas.
29. A coated monolith article obtainable by the method of any preceding embodiment.
30. A coated monolith article for the treatment of an exhaust gas, comprising a plurality of channels for the passage of an exhaust gas, each channel having a gas-contacting surface; the gas-contacting surface of at least some of the channels being at least partially coated by a cemented coating.
31. The coated monolith of embodiment 30, wherein the cemented coating comprises or consists of hydrated calcium silicate, hydrated calcium aluminate, hydrated calcium aluminosilicate and/or hydrated calcium aluminoferrite.
32. The coated monolith of embodiment 30 or embodiment 31, wherein the cemented coating comprises or consists of geopolymer.
33. The coated monolith article of any one of embodiments 29 to 32 which is one or more of a catalysed soot filter (CSF), a selective catalytic reduction filter (SCRF), a lean NOx trap filter (LNTF), and a gasoline particulate filter (GPF).

## Claims

1. A method of forming a coated monolith article for the treatment of an exhaust gas, the method comprising the steps of:
retaining a porous monolith article in a coating apparatus, the porous monolith article comprising a plurality of channels for the passage of an exhaust gas, each channel having a gas-contacting surface;
depositing cementitious particles as a dry powder onto the gas-contacting surface of at least some of the channels; and
reacting the cementitious particles with a liquid or gaseous reagent in situ within the porous monolith article to provide the coated monolith article.

2. The method according to claim 1, wherein the monolith article is a monolith filter, optionally a wall-flow filter, and/or a catalyst article, optionally a catalytic wall-flow filter.

3. The method of claim 1 or claim 2, wherein the cementitious particles are inorganic particles.

4. The method of any preceding claim, wherein the cementitious particles comprise or consist of a silicate, an aluminate, or an aluminosilicate.

5. The method of any preceding claim, wherein the cementitious particles comprise or consist of hydraulic cementitious particles and the step of reacting the cementitious particles with the liquid or gaseous reagent comprises hydrating the hydraulic cementitious particles.

6. The method of claim 5, wherein the hydraulic cementitious particles comprise or consist of calcium silicate, calcium aluminate, calcium aluminosilicate and/or calcium aluminoferrite.

7. The method of claim 5 or claim 6, wherein the liquid or gaseous reagent comprises or consists of water molecules.

8. The method of claim 7, wherein the step of hydrating the hydraulic cementitious particles comprises penetrating the channels with water molecules in a liquid phase.

9. The method of claim 8, wherein the water molecules in the liquid phase comprise an aerosolized mist and penetrating the channels with the water molecules optionally comprises spraying the aerosolized mist into the porous monolith article and/or drawing the aerosolized mist through the porous monolith article; and optionally the spraying and/or drawing of the aerosolized mist is performed using the coating apparatus.

10. The method of any preceding claim, wherein the cementitious particles comprise or consist of geopolymer precursor particles and the step of reacting the cementitious particles with the liquid or gaseous reagent comprises chemically reacting the geopolymer precursor particles.

11. A coated monolith article obtainable by the method of any preceding claim.

12. A coated monolith article for the treatment of an exhaust gas, comprising a plurality of channels for the passage of an exhaust gas, each channel having a gas-contacting surface; the gas-contacting surface of at least some of the channels being at least partially coated by a cemented coating.

13. The coated monolith of claim 12, wherein the cemented coating comprises or consists of hydrated calcium silicate, hydrated calcium aluminate, hydrated calcium aluminosilicate and/or hydrated calcium aluminoferrite.

14. The coated monolith of claim 12 or claim 13, wherein the cemented coating comprises or consists of geopolymer.

15. The coated monolith article of any one of claims 11 to 14 which is one or more of a catalysed soot filter (CSF), a selective catalytic reduction filter (SCRF), a lean NOx trap filter (LNTF), and a gasoline particulate filter (GPF).
